# EUROPEAN PATENT SPECIFICATION

(11) **EP 3 637 611 B1**
(45) Date of publication and mention of the grant of the patent: **09.11.2022**
(21) Application number: 18899627.6
(22) Date of filing: 06.12.2018
(51) Int. Cl.: H02M 7/48, H02J 1/12, H02J 3/38, H02M 5/293, H02M 5/297, H02M 1/00

(54) **VOLTAGE-TYPE SINGLE-STAGE MULTI-INPUT HIGH FREQUENCY LINK INVERTER HAVING BUILT-IN PARALLEL TIME-SHARING SELECTION SWITCHES**
SPANNUNGSGESTEUERTER EINSTUFIGER HOCHFREQUENZVERBINDUNGSUMRICHTER MIT MEHREREN EINGÄNGEN UND MIT EINGEBAUTEN PARALLELEN ZEITTEILUNGSWAHLSCHALTERN
ONDULEUR DE LIAISON HAUTE FRÉQUENCE À ENTRÉE MULTIPLE À ÉTAGE UNIQUE DE TYPE TENSION AYANT DES COMMUTATEURS DE SÉLECTION DE PARTAGE DE TEMPS PARALLÈLES INTÉGRÉS

(30) Priority: 09.01.2018 CN 201810019762
(43) Date of publication of application: 15.04.2020
(73) Proprietor: Qingdao University, Qingdao, Shandong 266000 (CN)
(72) Inventor: CHEN, Daolian, Qingdao, Shandong 266000 (CN)
(74) Representative: Bayramoglu et al.
(86) International application number: PCT/CN2018/000409
(87) International publication number: WO 2019/136575

(56) References cited:
- WO-A1-2015/038995
- CN-A- 101 534 059
- CN-A- 108 111 043
- CN-B- 101 534 055
- CN-C- 1 117 422
- US-A1- 2014 183 953

## Description

### Technical Field

The present disclosure relates to a single-stage multi-input buck type high-frequency link's inverter with an internal parallel-timesharing select switch, and belongs to the field of electronic conversion technology.

### Background

An inverter is a static converter which is used for converting an unstable and inferior direct current (DC) electrical power to a stable and superior alternating current (AC) electrical power through/by power semiconductor devices, is used by AC loads or forms an AC grid-tied transition. A low-frequency electrical isolation inverter (including an electrical isolation-free inverter) or a high-frequency electrical isolation inverter, which is respectively referred to as a low-frequency link's inverter or a high-frequency link's inverter, is provided between the output AC load/AC electrical grid and an input DC power source. The function of electrical isolation elements mainly include: (1) realizing the electrical isolation between an output and an input of the inverter and improving safety, reliability and electromagnetic compatibility in the course of the operation of the inverter; (2) matching an output voltage and an input voltage of the inverter, which realizes the technical effects that the output voltage of the inverter is higher than, equal to, or lower than the input voltage of the inverter, so as to greatly broaden the application field thereof; (3) when the working frequency of a high-frequency transformer or a high-frequency energy storage transformer is higher than 20 kHz, the volume and weight of the high-frequency transformer will be greatly reduced, and the audio noise generated by the high-frequency transformer is eliminated. Therefore, in the case of secondary electric power conversion of DC power sources such as DC generators, accumulators, photovoltaic cells and fuel cells, inverters are important devices.

New energy sources (also known as green energy sources) such as solar energy, wind energy, tidal energy and geothermal energy have the advantages of being clean, pollution-free, cheap, reliable, and sufficient. Therefore, the prospect of using new energy sources are vast. Since traditional fossil fuels (non-renewable energy sources) such as petroleum, coal and natural gas have become gradually insufficient and cause severe environmental pollution and global warming, and since nuclear energy production results in nuclear waste and environmental pollution, people have increasingly been focusing on the development and utilization of new energy sources. New energy power generation mainly includes photovoltaics, wind power generation, fuel cells, hydraulic power generation, and geothermal power generation. All of these energy resources have some limitations and deficiencies. For instance, new energy power generation power supplies are unstable, unsustainable and vary with climate changes. Hence, it is imperative to employ a distributed power supply system that can be employed by various new energy sources.

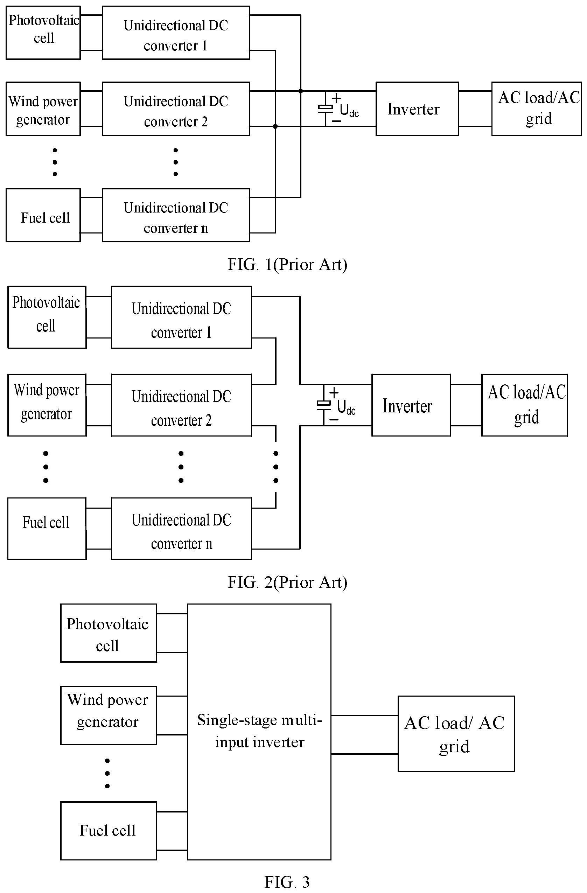

A traditional new energy source distributed power supply system, usually has a plurality of single-input DC converters to respectively perform an electric energy conversion on the new energy power generation equipment without the need of storing energy, such as a photovoltaic cell, a fuel cell, or a wind power generator, through a unidirectional converter as shown in FIGS. 1 and 2. Moreover, the new energy power generation equipment is connected to a DC bus bar of a common inverter wherein output ends are connected in parallel or in series, for ensuring cooperative power supply such that various new energy sources work in a collaborative manner. The distributed power generation system realizes that a plurality of input sources simultaneously supply power to the load and realizes a preferential use of the energy sources, which enhances the stability and flexibility of the system. Nevertheless, disadvantages such as having two-stage power conversion, low power-density, low conversion efficiency, and high cost, limits the usage of distributed power generation systems widely.

A novel multi-input inverter having a single-stage circuit structure shown in FIG. 3 is used to simplify the circuit structure and reduce power conversion. The novel multi-input inverter can replace a single-stage new energy source distributed power supply system formed by a traditional multi-input inverter having a DC converter and inverter in a two-stage cascade circuit structure. The single-stage multi-input inverter allows various new energy sources to be used as an input. Those input energy sources may have the same or greatly different properties, amplitudes, and characteristics. The novel single-stage new energy source distributed power supply system has the following advantages: the system has a simple circuit structure and a single-stage power conversion; a plurality of input sources supply electric power to the load in a simultaneous or time-sharing manner within a high-frequency switching period/cycle; and the cost is low.

Therefore, it is urgent to seek a single-stage multi-input inverter that allows various new energy sources to collaboratively supply power to a load and the novel single-stage new energy source distributed power supply system, which is very significant for enhancing stability and flexibility of the system, and realizing a full use of the new energy sources.

D1, CN 101 534 055 B, discloses a multi-input DC converter which can be used to replace multiple single input DC converters.

D2,WO 2015/038995 A1, discloses a single-phase cyclocovertor with integrated line-cycle energy storate.

D3, US 2014/183953 A1, discloses an apparatus for converting DC power to AC power.

### Summary

It is an objective for the present disclosure to provide a single-stage multi-input buck type high-frequency link's inverter according to claim 1, with an internal parallel-timesharing select switch, wherein the inverter is cooperatively supplied by various new energy sources; the input DC power supplies are connected to the common ground; a parallel- timesharing select switch is arranged outside a multi-input single-output high-frequency inverting circuit; a high-frequency isolation is performed between an output and an input of the inverter; a plurality of input power supplies supply electric power in a time-sharing manner in a switching period; the circuit topology is simple; an output high-frequency voltage-transformation filter circuit is common; a single-stage power conversion is performed; the conversion efficiency is high; the output voltage ripple is small; the output capability is small to medium; and the application prospect is broad.

The technical solution of the present disclosure is defined in claim 1 and claim 2.

### Brief Description of the Drawings

FIG. 1 shows a two-stage new energy source distributed power supply system with output ends of a plurality of traditional unidirectional DC converter connected in parallel.
FIG. 2 shows a two-stage new energy source distributed power supply system with output ends of a plurality of traditional unidirectional DC converter connected in series.
FIG. 3 is a schematic block diagram of a novel single-stage multi-input inverter.
FIG. 4 is a schematic block diagram of a single-stage multi-input buck type high-frequency link's inverter with an internal parallel-timesharing select switch.
FIG. 5 is a circuit diagram showing a bidirectional power flow of the single-stage multi-input buck type high-frequency link's inverter with the internal parallel-timesharing select switch.
FIG. 6 is a schematic oscillogram showing a steady state of a bipolar phase shift control of the single-stage multi-input buck type high-frequency link's inverter with the internal parallel-timesharing select switch
FIG. 7 is a schematic oscillogram showing a steady state of a unipolar phase shift control of the single-stage multi-input buck type high-frequency link's inverter with the internal parallel-timesharing select switch
FIG. 8 is a schematic diagram of a push-pull full-wave circuit of the topology embodiment 1 of the single-stage multi-input buck type high-frequency link's inverter with the internal parallel-timesharing select switch.
FIG. 9 is a schematic diagram of a push-pull bridge circuit of the topology embodiment 2 of the single-stage multi-input buck type high-frequency link's inverter with the internal parallel-timesharing select switch.
FIG. 10 is a schematic diagram of a push-pull forward full-wave circuit of the topology embodiment 3 of the single-stage multi-input buck type high-frequency link's inverter with the internal parallel-timesharing select switch.
FIG. 11 is a schematic diagram of a push-pull forward bridge circuit of the topology embodiment 4 of the single-stage multi-input buck type high-frequency link's inverter with the internal parallel-timesharing select switch.
FIG. 12 is a schematic diagram of a half-bridge full-wave circuit of the topology embodiment 5 of the single-stage multi-input buck type high-frequency link's inverter with the internal parallel-timesharing select switch.
FIG. 13 is a schematic diagram of a half-bridge bridge circuit of the topology embodiment 6 of the single-stage multi-input buck type high-frequency link's inverter with the internal parallel-timesharing select switch.
FIG. 14 is a schematic diagram of a full-bridge full-wave circuit of the topology embodiment 7 of the single-stage multi-input buck type high-frequency link's inverter with the internal parallel-timesharing select switch.
FIG. 15 is a schematic diagram of a full-bridge bridge circuit of the topology embodiment 8 of the single-stage multi-input buck type high-frequency link's inverter with the internal parallel-timesharing select switch.
FIG. 16 is a block diagram of energy management control showing an instantaneous output voltage and input current feedback bipolar phase shift master-slave power distribution of the single-stage multi-input buck type high-frequency link's inverter with the internal parallel-timesharing select switch.
FIG. 17 is a schematic oscillogram of the energy management control showing an instantaneous output voltage and input current feedback bipolar phase shift master-slave power distribution of the single-stage multi-input buck type high-frequency link's inverter with the internal parallel-timesharing select switch.
FIG. 18 is a block diagram of energy management control showing an instantaneous output voltage and input current feedback unipolar phase shift master-slave power distribution of the single-stage multi-input buck type high-frequency link's inverter with the internal parallel-timesharing select switch.
FIG. 19 is a schematic oscillogram of the energy management control showing an instantaneous output voltage and input current feedback unipolar phase shift master-slave power distribution of the single-stage multi-input buck type high-frequency link's inverter with the internal parallel-timesharing select switch.
FIG. 20 is a circuit diagram showing a unidirectional power flow of the single-stage multi-input buck type high-frequency link's inverter with the internal parallel-timesharing select switch.
FIG. 21 is a diagram of the voltage type single-stage multi-input high-frequency link's independent power supply system with the internal parallel-timesharing select switch, having the output end connected in parallel to a single-stage isolation bidirectional charge/discharge converter.
FIG. 22 shows an energy management control strategy of a maximum power output having an output voltage independent control loop circuit of the single-stage isolation bidirectional charge/discharge converter.
FIG. 23 is an oscillogram of an output voltage uₒ of the independent power supply system and electric currents i_{Lf} and i_{Lf}' of an output filter inductor.

### Detailed Description of the Embodiments

The technical solution of the present disclosure will be further described hereinafter with reference to the drawings and the embodiments of the specification.

A single-stage multi-input buck type high-frequency link's inverter with an internal parallel-timesharing select switch is formed by connecting a plurality of input filters connected to common ground and a common output high-frequency isolation voltage-transformation cycloconverting filtering circuit through a multi-input single-output high-frequency inverting circuit. Each input end of the multi-input single-output high-frequency inverting circuit is connected to an output end of each of the input filters in a one-to-one connection. An output end of the multi-input single-output high-frequency inverting circuit is connected to an input end of a high-frequency transformer of the output high-frequency isolation voltage-transformation cycloconverting filtering circuit. The multi-input single-output high-frequency inverting circuit is composed of a plurality of internally bidirectional power flow single-input single-output high-frequency inverting circuits having internal parallel-timesharing selector four-quadrant power switches. The multi-input single-output high-frequency inverting circuit is equivalent to one bidirectional power flow single-input single-output high-frequency inverting circuit at any time. The output high-frequency isolation voltage-transformation cycloconverting filtering circuit is composed of the high-frequency transformer, the cycloconverter, and the output filter successively connected in cascade. The cycloconverter is composed of a plurality of four-quadrant high-frequency power switches capable of withstanding the bidirectional voltage stress and the bidirectional current stress.

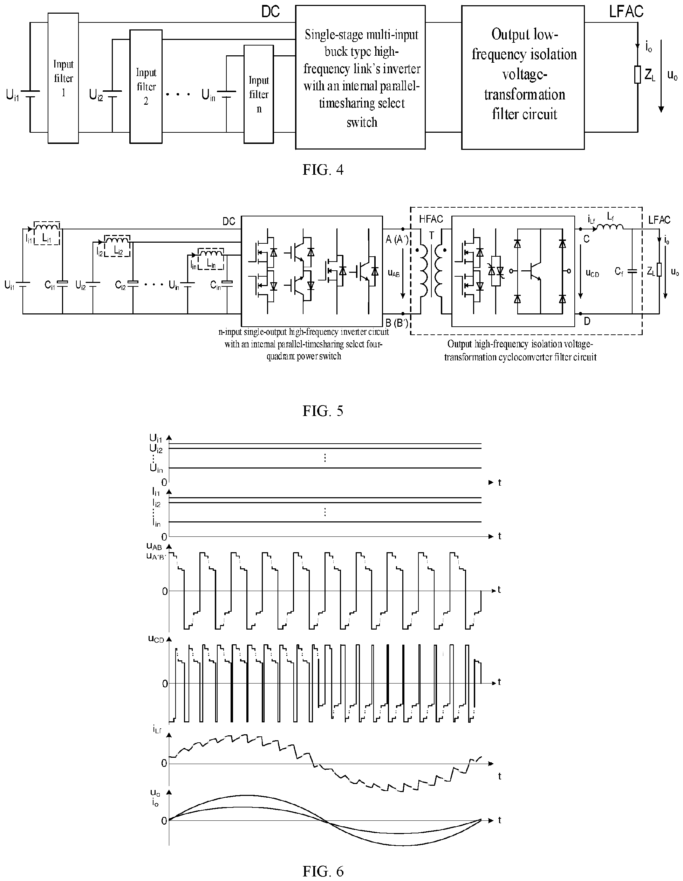

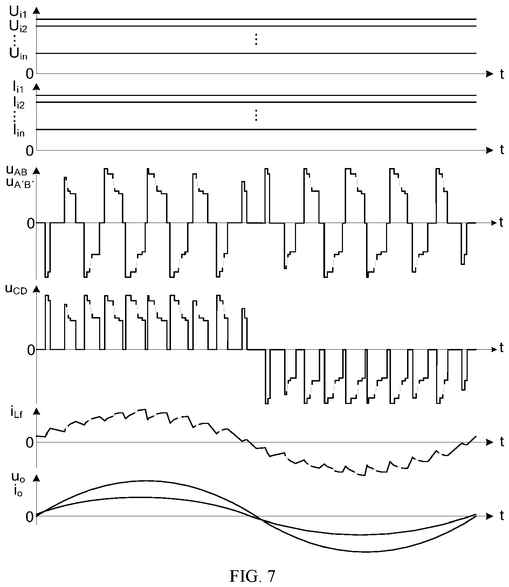

A schematic block diagram, a circuit structure (the bidirectional power flow) of the single-stage multi-input buck type high-frequency link's inverter with the internal parallel-timesharing select switch, a steady-state schematic oscillogram/waveform of a bipolar phase shift control inverter and a unipolar phase shift control inverter are respectively shown in FIGS. 4, 5, 6, and 7. In FIGS. 4, 5, 6, and 7, Uᵢ₁, Uᵢ₂,..., Uᵢₙ are *n* (*n* is a natural number larger than 1) paths of input DC voltage sources. *Z_{L}* is a single-phase output AC load (including a single-phase output AC passive load and a single-phase AC power grid load) and uₒ and iₒ are respectively a single-phase output alternating voltage and alternating current. An *n*-input single-output high-frequency inverting circuit is composed of a plurality of bidirectional power flow single-input single-output high-frequency inverting circuits with internal parallel-timesharing select four-quadrant power switches. The *n*-input single-output high-frequency inverting circuit is composed of a plurality of four-quadrant power switches capable of withstanding bidirectional voltage stress and bidirectional current stress and one or more two-quadrant power switches capable of withstanding unidirectional voltage stress and bidirectional current stress, or merely is composed of a plurality of four-quadrant power switches capable of withstanding bidirectional voltage stress and bidirectional current stress, which may employ power devices such as Metal-Oxide-Semiconductor Field-Effect Transistor (MOSFET), Insulated Gate Bipolar Transistor (IGBT), and Giant Transistor (GTR). The output high-frequency isolation voltage-transformation cycloconverting filtering circuit is composed of the high-frequency transformer, the cycloconverter, and the output filter successively connected in cascade. Specifically, the cycloconverter is composed of a plurality of four-quadrant power switches capable of withstanding the bidirectional voltage stress and the bidirectional current stress. Due to space limitation, the drawings only show a circuit diagram of an LC output filter applicable for a passive AC load and do not show a circuit diagram of an L or LCL output filter applicable for the AC power grid load. The *n*-path input filter may be the LC filter (which includes filter inductors Lᵢ₁, Lᵢ₂, ..., Lᵢₙ in the dashed-line box) or the filter capacitor (which does not include the filter inductors Lᵢ₁, Lᵢ₂, ..., Lᵢₙ in the dashed-line box). When the LC filter is employed, n-paths input direct current will be smoother. The *n*-input single-output high-frequency inverting circuit modulates the *n*-path input DC voltage sources Uᵢ₁, Uᵢ₂, . . . , Uᵢₙ into a bipolar two-state multi-level high-frequency voltage square wave u_{AB} or a bipolar three-state multi-level SPWM voltage wave u_{A'B'}, an amplitude of which depends on the input DC voltage. The voltage wave is isolated and transformed by the high-frequency transformer T and is demodulated by a cycloconverter to form a bipolar two-state or unipolar three-state multi-level SPWM voltage wave u_{CD}, and then passes through the output filter Lf-Cf to obtain a high-quality sinusoidal AC voltage uₒ or sinusoidal AC iₒ on the single-phase AC passive load or the single-phase AC power grid. n input pulse currents of the n-input single-output high-frequency inverting circuit pass through the input filters Lᵢ₁-Cᵢ₁, Lᵢ₂-Cᵢ₂, ..., Lᵢₙ-Cᵢₙ or Cᵢ₁, Cᵢ₂, ..., Cᵢₙ to obtain smooth input direct currents Iᵢ₁, Iᵢ₂,..., Iᵢₙ in the n paths of input DC power supplies Uᵢ₁, Uᵢ₂, ..., Uᵢₙ. It should be further noted that, an amplitude of the bipolar two-state multi-level high-frequency voltage square wave u_{AB} and the bipolar three-state multi-level SPWM voltage wave u_{A'B'} is ±2(Uᵢ₁, Uᵢ₂, ..., Uᵢₙ) (the push-pull circuit), ±(Uᵢ₁, Uᵢ₂, ..., Uᵢₙ) (the push-pull forward circuit and the full-bridge bridge circuit), or ±1/2(Uᵢ₁, Uᵢ₂, ..., Uᵢₙ) (the half-bridge bridge circuit). An amplitude of u_{CD} is ±(Uᵢ₁N₂/N₁, Uᵢ₂N₂/N₁, ..., UᵢₙN₂/N₁) (the push-pull circuit, the push-pull forward circuit, and the full-bridge bridge circuit) or ±1/2(Uᵢ₁N₂/N₁, Uᵢ₂N₂/N₁, ..., UᵢₙN₂/N₁) (the half-bridge bridge circuit).

The single-stage multi-input buck type high-frequency link's inverter with the internal parallel-timesharing select switch is a buck inverter, and n input sources are connected in parallel and supply electric power to the load in a time-sharing manner. In principle, this inverter is equivalent to a superposition of a plurality of voltage type single-input inverters on the voltage of the output end, namely a relationship between the output voltage uₒ, the input DC voltages (Uᵢ₁, Uᵢ₂, ..., Uin), a turn ratio of the high-frequency transformer N₂/N₁, a duty ratio (d₁, d₂,..., dⱼ,...,dₙ) is complicated. When the amplitudes of n input sources are equal, namely Uᵢ₁=Uᵢ₂=_{...}=Uᵢₙ= Uᵢ, uₒ=(dⱼ+dⱼ₊₁+...+dₙ)UᵢN₂/Nᵢ=(180°-θ)/180°UᵢN₂/N₁ (unipolar phase shift control) or uₒ=[2(dⱼ+dⱼ₊₁+...+dₙ)-1]UᵢN₂/N₁=[2(180°-θ)/180°-1]UᵢN₂/N₁ (bipolar phase shift control), wherein 1≤j≤n, and θ is a phase shift angle. If the phase shift angle θ and the turn ratio of the high-frequency transformer N₂/N₁ are appropriate, uₒ may be larger than, equal to, or lower than a sum of the DC voltages Uᵢ₁+Uᵢ₂+... +Uᵢₙ. The high-frequency transformer of the inverter not only enhances the safety, the reliability and the electromagnetic compatibility of the inverter in the course of operation, but also matches the output voltage and the input voltage, thereby realizing the technical effect that the output voltage of the inverter may be larger than, equal to, or lower than the sum of the input DC voltages Uᵢ₁+Uᵢ₂+... +Uᵢₙ, which broadens the field of application. Because 0≤θ≤180°, it can be inferred that uₒ<(Uᵢ₁+Uᵢ₂+...+Uᵢₙ)N₂/N₁, namely the output voltage uₒ always is lower than a sum of products (Uᵢ₁+Uᵢ₂+...+Uᵢₙ)N₂/N₁ of the input DC voltages (Uᵢ₁, Uᵢ₂, ..., Uᵢₙ) and the turn ratio N2/N1 of the high-frequency transformer. These kinds of inverters are referred to as a single-stage multi-input buck type (voltage type) high-frequency link's inverter with an internal parallel-timesharing select switch since the inverter has a single-stage circuit structure, a working frequency of the transformer is high-frequency, and the multi-path parallel-timesharing select four-quadrant power switch is located inside the high-frequency inverting circuit. The n input sources of the inverter can supply electric power to the output AC load within a high-frequency switching period only in a time-sharing manner, wherein the duty ratios may be equal (i.e., d₁=d₂=...=dₙ), or not equal (i.e., d₁≠d₂...≠dₙ).

Since the single-stage multi-input buck type high-frequency link's inverter with an internal parallel-timesharing select switch shares one multi-input single-output high-frequency inverting circuit and one output high-frequency isolation voltage-transformation cycloconverting filtering circuit, the single-stage multi-input buck type high-frequency link's inverter with the internal parallel-timesharing select switch is essentially different from the circuit structure of the traditional multi-input inverter composed of the DC convertor and the inverter connected in two-stage cascade. Therefore, the inverter of the present disclosure is novel and creative. Moreover, the inverter has the following advantages: a high-frequency isolation is performed on the output and the input; the multi-input power supply supplies electric power in a time-sharing manner; the circuit topology is simple; a single-stage power conversion is performed; the step-up voltage ratio is high; the output voltage can be flexibly configured; a conversion efficiency of the single-stage power conversion is high (that means that the energy loss is low); the output voltage ripple is small; the output capability is small to medium; the cost is low, and the prospect for applications is vast. Thus, the present disclosure is an ideal energy-saving and consumption-reducing single-stage multi-input inverter, which is of a greater value in the present era when an energy-saving and conservation is necessary.

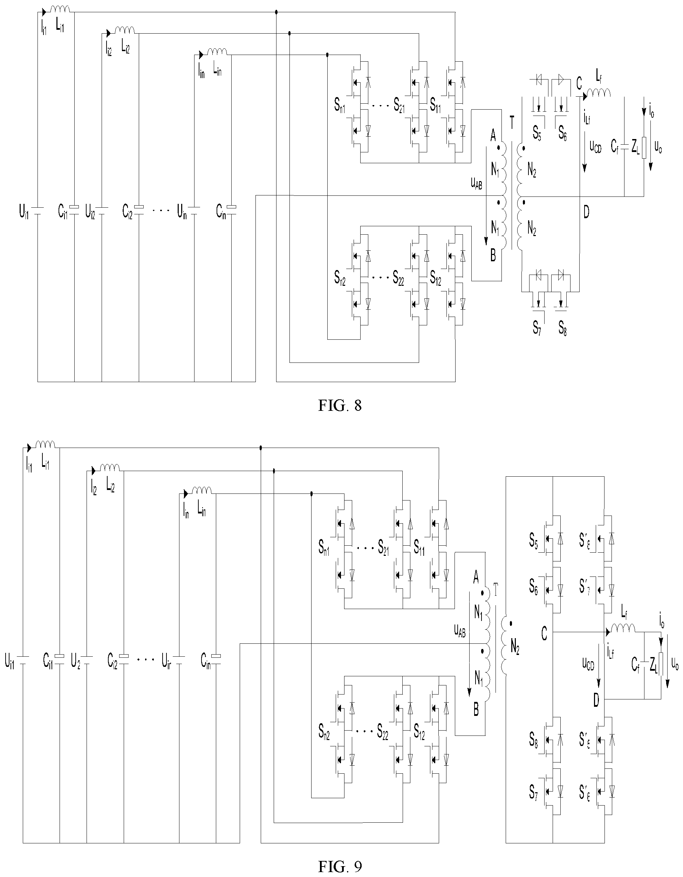

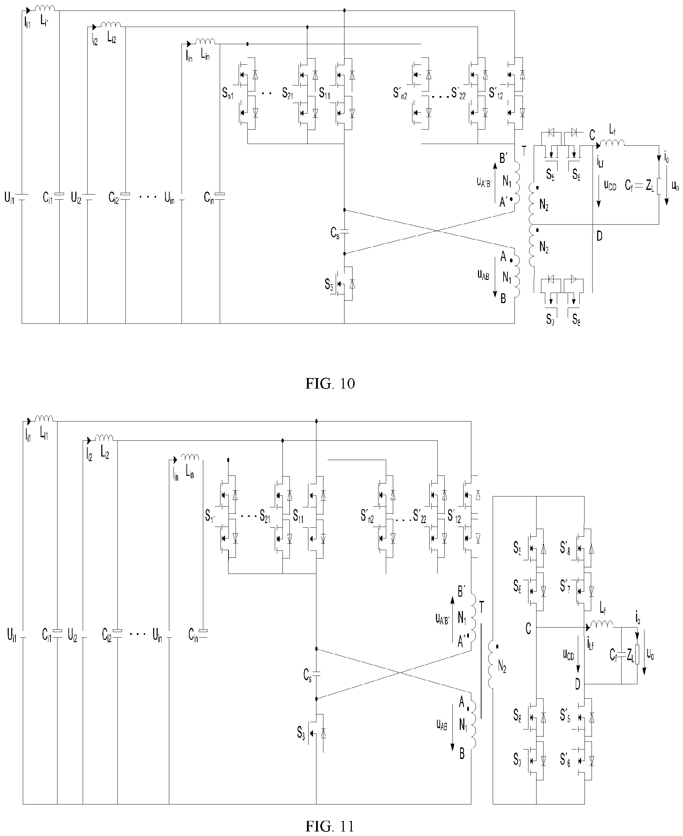

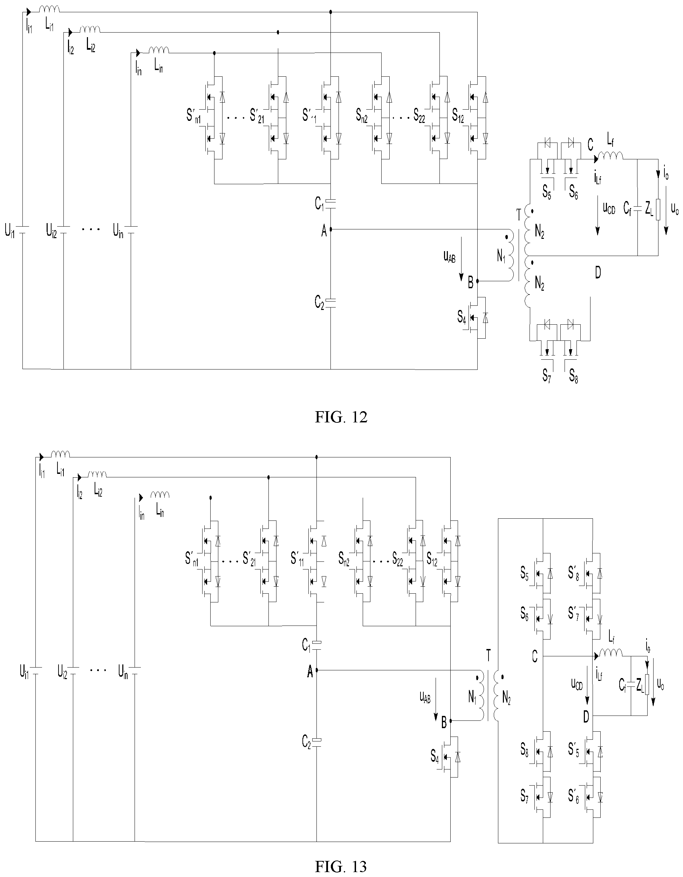

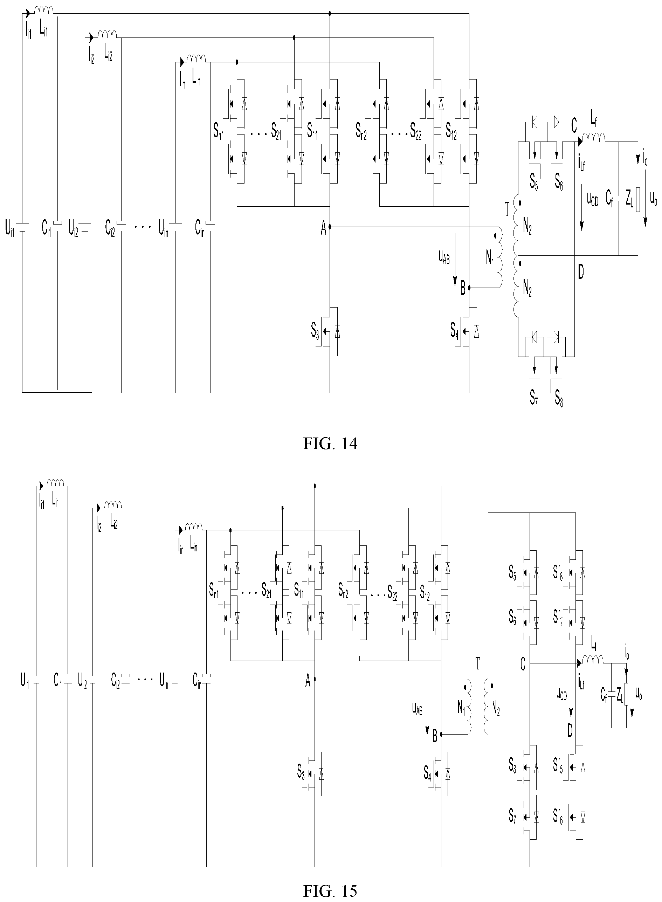

Embodiments of the topology family of the single-stage multi-input buck type high-frequency link's inverter with the internal parallel-timesharing select switch are shown in FIGS. 8, 9, 10, 11, 12, 13, 14, and 15. As shown in FIGS. 8 and 9, the push-pull circuits are respectively composed of 2(n+1) and 2(n+2) four-quadrant high-frequency power switches capable of withstanding the bidirectional voltage stress and the bidirectional current stress. The push-pull forward circuits shown in FIGS. 10 and 11, and the half-bridge bridge circuits shown in FIGS. 12 and 13 are respectively composed of 2(n+1) and 2(n+2) four-quadrant high-frequency power switches capable of withstanding the bidirectional voltage stress and the bidirectional current stress, and one two-quadrant high-frequency power switch capable of withstanding the unidirectional voltage stress and the bidirectional current stress. As shown in FIGS. 14 and 15, the full-bridge bridge circuits are respectively composed of by 2(n+1) and 2(n+2) four-quadrant high-frequency power switches capable of withstanding the bidirectional voltage stress and the bidirectional current stress, and two two-quadrant high-frequency power switch capable of withstanding the unidirectional voltage stress and the bidirectional current stress. It should be noted that, the circuits shown in FIGS. 8, 9, 10, 11, 12, 13, 14, 15 merely show the case when the input filter is the LC filter (As shown in FIGS. 12 and 13, the input filter capacitors of the half-bridge bridge circuit are two bridge arm capacitors C₁ and C₂), and fails to show the case when the input filter is the capacitor filter due to the space limitation. The circuits shown in FIGS. 10, 11, 12, 13, 14 and 15 don't need to completely employ the four-quadrant high-frequency power switches, and one or two two-quadrant high-frequency power switches are omitted in the drawings. The push-pull forward circuits shown in FIGS. 10 and 11 and the half-bridge bridge circuits shown in FIGS. 12 and 13 are merely applicable for the case when the voltages of *n* input power supplies are equal. The circuits shown in FIGS. 8-15 show circuit diagrams of the LC output filter applicable for the passive AC load, and fail to show a circuit diagram of an L or LCL output filter applicable for the AC power grid load. The power switch voltage stresses of eight topology embodiments of the single-stage multi-input buck type high-frequency link's inverter with the internal parallel-timesharing select switch are shown in the Table 1. In the Table 1, Uᵢₘₐₓ=max(Uᵢ₁, Uᵢ₂, ..., Uᵢₙ), wherein *N*=1, 2, ..., *n*. The push-pull circuit and the push-pull forward circuit are applicable for a medium-power low-voltage input inverter. The half-bridge bridge circuit is applicable for a small-power high-voltage input inverter. The full-bridge bridge circuit is applicable for a high-power high-voltage input inverter. The circuit topology family is used to convert a plurality of unstable input DC voltages connected to common ground into a kind of high-quality output AC with a stable voltage, which can achieve a novel, fine-property promising single-stage distributed power supply system with various new energy sources. A plurality of input sources, such as photovoltaic cells 40-60VDC/220V50HzAC or 115V400HzAC, 10kw proton exchange membrane fuel cells 85-120V/220V50HzAC or 115V400HzAC, small and medium-sized household wind power generators 24-36-48VDC/220V50HzAC or 115V400HzAC, large-sized wind power generators 510VDC/220V50HzAC or 115V400HzAC, are used to supply electric power for the AC load or the AC power grid.

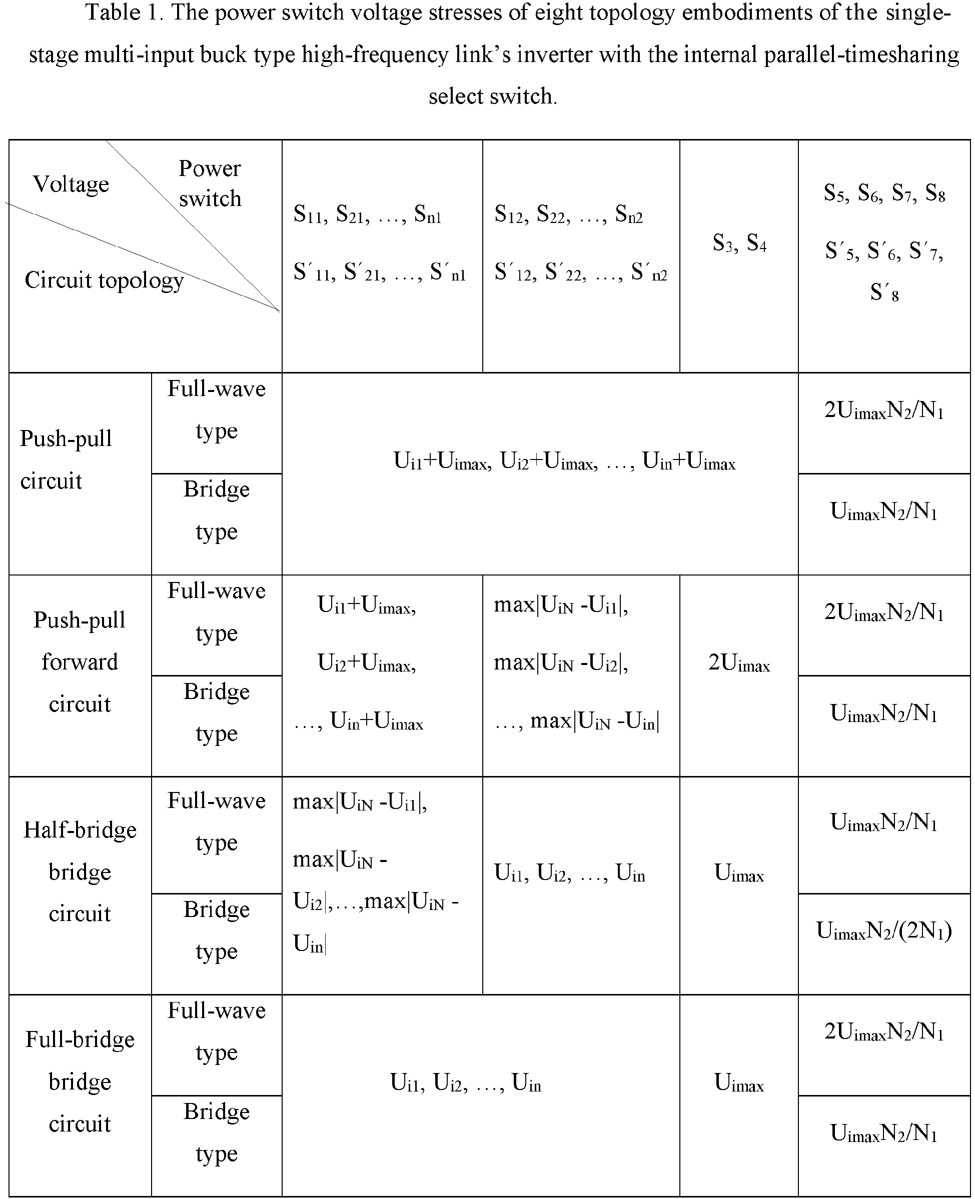

The energy management control strategy is crucial to a power supply system combined with various new energy sources. Due to a plurality of input sources and corresponding power switch units, a plurality of duty ratios are required to be controlled, namely there are a plurality of control degrees of freedom, which make it possible for energy management of the plurality of new energy sources. The energy management control strategies of the single-stage multi-input buck type high-frequency link's inverter with the internal parallel-timesharing select switch should simultaneously have three functions which are energy management of the input sources, maximum power point tracking (MPPT) of new energy source generating equipment including the photovoltaic cell and a wind power generator, and controlling the output voltage (current). In some cases, it is further required for charge/discharge control of the accumulator and a system with smooth and seamless switching between different power supply modes. The single-stage multi-input buck type high-frequency link's inverter with the internal parallel-timesharing select switch employs two different energy management modes. The energy management mode (I) is a master-slave distribution method, wherein the power needed by the load is supplied as much as possible by the 1^{st}, 2^{nd}, ... n-1^{th} paths of the input sources of a main power supply equipment. When the input electric currents of the 1^{st}, 2^{nd}, ... n-1^{th} paths of the input sources are determined, the input powers of the 1^{st}, 2^{nd}, ... n-1^{th} paths of the input sources are determined accordingly. A shortage of the power needed by the load is supplied by the n^{th} path of the input source of the power supply equipment, without the addition of accumulator power storage equipment. The energy management mode (II) is a maximum power inputting mode, wherein the 1^{st}, 2^{nd}, ..., n^{th} paths of the input sources supply the maximum power to the load, which eliminates the accumulator power storage equipment and satisfies requirements of the grid-tied power generating system to make full use of the energy source. One output end is connected in parallel to an accumulator charge/discharge device to realize the stability of the output voltage of the independent power supply system. When the input voltages of the *n*-paths new energy sources are all determined, the input powers of the 1^{st}, 2^{nd}, ... n^{th} paths of the input sources can be controlled by controlling the input currents of the 1^{st}, 2^{nd}, ... n^{th} paths of the input sources.

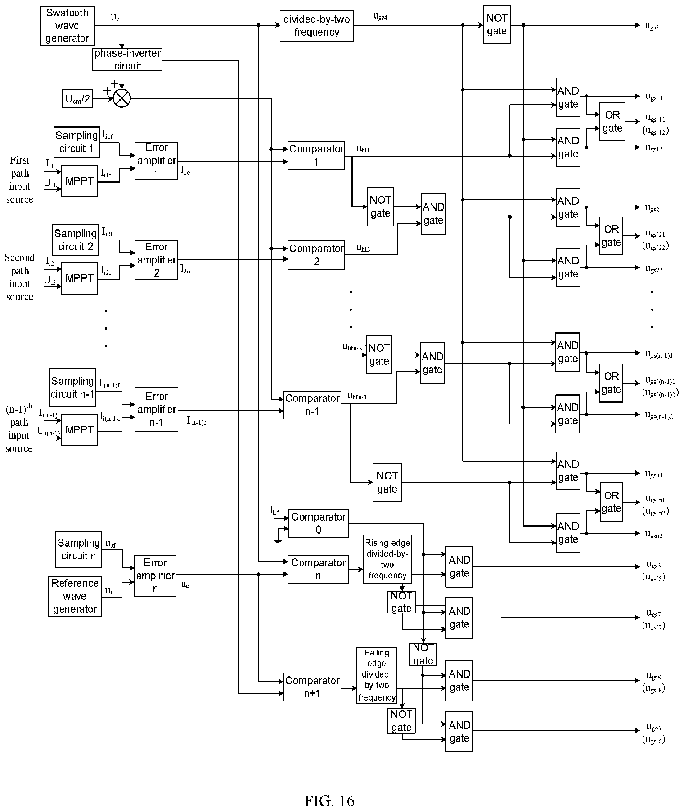

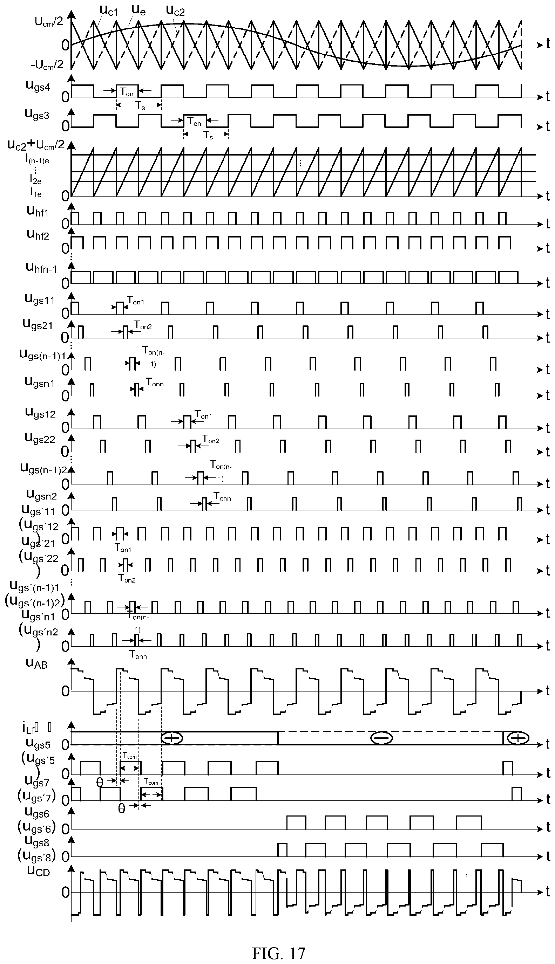

The single-stage multi-input buck type high-frequency link's inverter with the internal parallel-timesharing select switch employs the master-slave power distribution energy management bipolar phase-shift or unipolar phase-shift control strategy with an instantaneous output voltage and input current feedback to form the independent power supply system, or employs the energy management control strategy of an input current instantaneous feedback bipolar phase shift or unipolar phase shift maximum power output to form the grid-tied power generating system. The energy management control block diagrams and control schematic waveforms of an output voltage and the input current feedback bipolar SPWM or unipolar SPWM master-slave power distribution, when the powers of the 1^{st}, 2^{nd}, ... n-1^{th} paths of input energy sources are fixed and the shortage of power needed by the load is supplied by the n^{th} path of input sources, are respectively shown in FIGS. 16, 17 ,18, and 19. The basic idea of the bipolar phase shift control scheme shown in FIGS. 16 and 17 is as follows. The n-input single-output high-frequency inverting circuit generates a bipolar two-state multi-level high-frequency square wave The time-sharing turn-on time of the 1^{st}, 2^{nd}, ... n-1^{th} paths of the power switches is obtained by distributing the time Tₛ/2 according to a magnitude of the error current (realizing a maximum power outputting of the 1^{st}, 2^{nd}, ... n-1^{th} paths of the input sources). After distribution, the rest time is the turn-on time of the n^{th} path of the power switch (complementing the n^{th} path of input source). At any time, always and only one path of the input source is switched in, ensuring a forward transmission or backward feedback of the energy. The energy can timely and properly feed back to that path of the input source switched in before. The stability of the output voltage of the inverter is realized by the phase shifting between the cycloconverter and the n-input single-output high-frequency inverting circuit. Naturally current commutating of leakage inductance energy of the high-frequency transformer and a zero current switch are realized by commutation overlap of the cycloconverter. This control strategy is applicable for the circuits shown in FIGS. 8-15. The 1^{st}, 2^{nd}, ... n-1^{th} paths of input current feedback signals, I_{i1f}, I_{i2f}, ..., I_{i(n-i)f} of the inverter and the reference current signals Iᵢ₁ᵣ, Iᵢ₂ᵣ, ..., Iᵢ₍ₙ₋₁₎ᵣ obtained by performing the maximum power point calculating on the 1^{st}, 2^{nd}, ... n-1^{th} paths of input sources are compared and magnified by a proportional-integral controller. The current error amplified signals I₁ₑ, I₂ₑ, ..., I₍ₙ₋₁₎ₑ are compared with a unipolar sawtooth carrier wave -u_{c}+U_{cm}/2 after phase shifting, and passes through a proper combinational logic circuits to obtain the time-sharing control signals U_{gs11}, U_{gs21}, ..., U_{gsn1}, U_{gs12}, U_{gs22}, ..., U_{gsn2}, U_{gs'11}, U_{gs'21}, ..., U_{gs'n1}, u_{gs'12}, u_{gs'22}, ..., u_{gs'n2} of the power switch of the n-input single-output high-frequency inverting circuit. After the bipolar sawtooth carrier wave u_{c} passes through the rising edge divided-by-two frequency, the control signal u_{gs4} of the power switch of the n-input single-output high-frequency inverting circuit and the inversion signal u_{gs3} thereof are obtained. The output voltage feedback signal u_{of} and the sinusoidal reference voltage uᵣ are compared and amplified by the proportional-integral controller. The voltage error amplified signal ue is respectively compared with the bipolar sawtooth carrier wave u_{c} and -u_{c}. The control signals U_{gs5}(u_{gs'5}), U_{gs6}(U_{gs'6}), U_{gs7}(U_{gs'7}), u_{gs8}(u_{gs'8}) of the power switches of the cycloconverter are obtained by an output inductance current polarity selection signal and a proper combinational logic circuit.

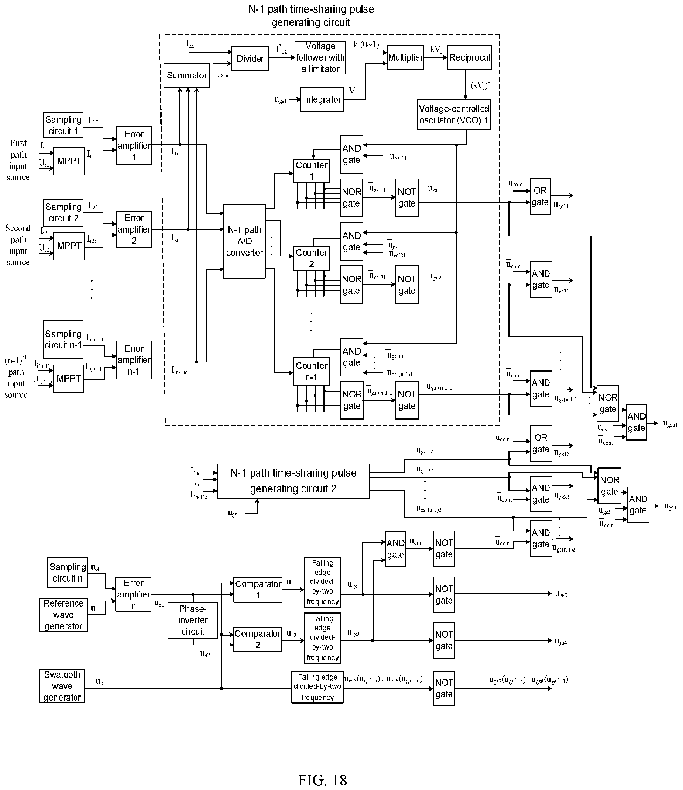

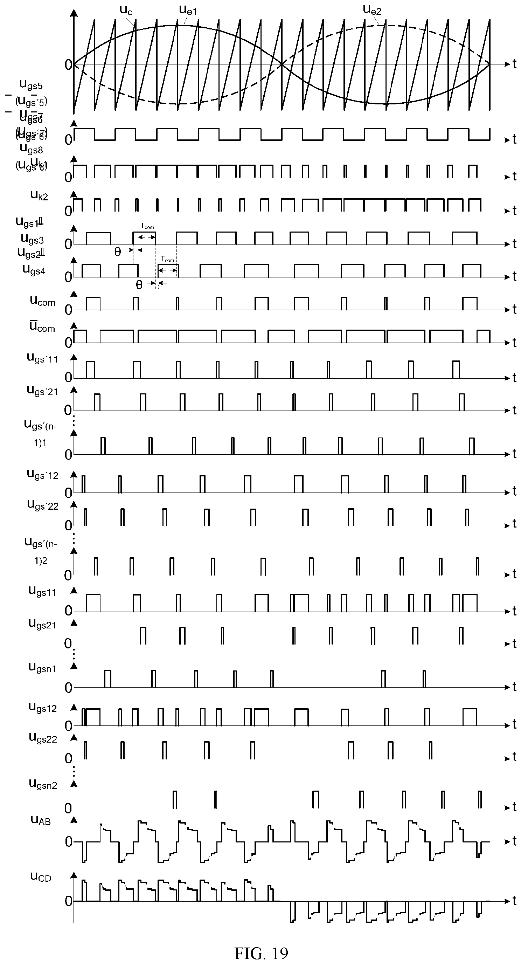

The basic idea of the unipolar phase shift control scheme shown in FIGS. 18 and 19 is as follows. The bipolar three-state multi-level SPWM wave is generated by phase shifting between a right bridge arm and a left bridge arm of the n-input single-output high-frequency inverting circuit. The cycloconverter demodulates the bipolar three-state multi-level SPWM wave into a unipolar three-state multi-level SPWM wave. The cycloconverter performs a switch conversion when the bipolar three-state multi-level SPWM wave output by the high-frequency inverting circuit is zero, thereby realizing the zero voltage switch and at any time always and only one path of the input source is switched in (i.e., "1" state or "-1" state, ensuring a forward transmission or the backward feedback of the energy) or "0" state (freewheeling state), and the energy can timely and properly feed back to the path of the input source connected before. The proposed control strategy is merely applicable for the circuits shown in FIGS. 14 and 15. The time-sharing turn-on time of the 1^{st}, 2^{nd}, ... n-1^{th} paths of the power switches is obtained by distributing the SPWM-distribution total turn-on time of the left bridge arm and the right bridge arm according to the magtitude of the error current (to realize the maximum power output of the 1^{st}, 2^{nd}, ... n-1^{th} path of the input sources). The rest time after distribution is the turn-on time of the n^{th} power switch (to realize the power complement of the n^{th} path of the input source). The input current feedback signals I_{i1f}, I_{i2f}, ..., I_{i(n-1)f}, of the 1^{st}, 2^{nd}, ... n-1^{th} paths of the inverter and the reference current signals Iᵢ₁ᵣ, Iᵢ₂ᵣ, ..., Iᵢ₍ₙ₋₁₎ᵣ obtained by performing the maximum power point calculating on the 1^{st}, 2^{nd}, ... n-1^{th} paths of the input source are respectively compared and amplified by the proportional-integral controller. The current error amplified signals I₁ₑ, I₂ₑ, ..., I₍ₙ₋₁₎ₑ respectively pass through the time-sharing pulse generation circuits 1 and 2, and the proper combinational logic circuits to obtain the time-sharing control signals u_{gs11}, u_{gs21}, ..., u_{gsn1}, u_{gs12}, u_{gs22}, ..., u_{gsn2} of the power switch of the n-input single output high-frequency inverting circuit. The output voltage feedback signal u_{of} of the inverter and the sinusoidal voltage reference uᵣ are compared and amplified by the proportional-integral controller. The voltage error amplified signal ue and the inversion signal -ue thereof are respectively compared with the bipolar sawtooth carrier wave u_{c}, and pass through the falling edge divided-by-two frequency and the proper combinational logic circuit to obtain control signals u_{gs3} and u_{gs4} of the power switches of a lower bridge arm of the *n*-input single-output high-frequency inverting circuit. In the figures, u_{com} represents a common turn-on signal of an upper bridge arm of the *n*-input single-output high-frequency inverting circuit. When the common turn-on signal u_{com} of the upper bridge arm is at a high level, the power switches S₁₁, S₁₂ in the 1^{st} path are turned on simultaneously (alternatively, it can also be designed that power switches in the other paths are turned on simultaneously), and the power switches S₂₁, ..., Sₙ₁, S₂₂, ..., Sₙ₂ in the 2^{st}, ..., n^{th} path are turned off, ensuring that there is a freewheeling circuit. The bipolar sawtooth carrier wave u_{c} passes through the falling edge divided-by-two frequency to obtain the control signals u_{gs5}(u_{gs'5}), u_{gs6}(u_{gs'6}), u_{gs7}(u_{gs'7}), u_{gs8}(u_{gs'8}) of the power switch of the cycloconverter. In the time-sharing pulse generating circuits 1 and 2, I_{eΣ}, I_{eΣm}, I * _{eΣ} are respectively the sum of the current error amplified signals I₁ₑ, I₂ₑ, ..., I₍ₙ₋₁₎ₑ, a maximum value of the sum of the current error amplified signals I₁ₑ, I₂ₑ, ..., I₍ₙ₋₁₎ₑ and the ratio of I_{eΣ} and I_{eΣm}, and V₁ and k(0 ~ 1) are respectively an integral value and a proportionality coefficient of u_{gs1}.

The 1^{st}, 2^{nd}, ... n-1^{th} paths of the current regulators and the n^{th} path of the voltage regulator respectively work independently. The 1^{st}, 2^{nd}, ... n-1^{th} paths of the current regulators are used to realize a maximum power output of the 1^{st}, 2^{nd}, ... n-1^{th} paths of the input sources. The n^{th} path of the voltage regulator is used to realize the stability of the output voltage of the inverter. The n paths of the input sources collaboratively supply the electric power to the load. When the input voltage or the load varies, the error voltage signal ue and the error current signals I₁ₑ, I₂ₑ, .., I₍ₙ₋₁₎ₑ can be altered by adjusting the reference voltage uᵣ and the reference current Iᵢ₁ᵣ, Iᵢ₂ᵣ, .., Iᵢ₍ₙ₋₁₎ᵣ, or adjusting the feedback voltage u_{of} and I_{i1f}, I_{i2f}, ..., I_{i(n-1)f}, thereby to alter the duty ratios d₁, d₂, ..., dₙ. In this way, the output voltage and the input current (the output power) can be adjusted and stabilized.

As shown in FIGS. 16-19, the n^{th} path of the input source shown in FIGS. 16-19 is designed as an input current feedback to control the input current, so as to form the energy management control strategy of the input current instantaneous feedback bipolar phase shift, or the unipolar phase shift maximum power output. The energy management control strategy of bipolar phase shift maximum power output can be described in brief as follows. The reference current signals Iᵢ₁ᵣ, Iᵢ₂ᵣ,..., Iᵢₙᵣ obtained by performing the maximum power point calculating on the 1^{st}, 2^{nd}, ... n^{th} paths of input source and the 1^{st}, 2^{nd}, ... n^{th} paths of the input current feedback signals I_{i1f}, I_{i2f}, ...,I_{inf} of the inverter are respectively compared and amplified by a proportional-integral controller. The current error amplified signals I₁ₑ, I₂ₑ, ..., I₍ₙ₋₁₎ₑ are compared with the unipolar sawtooth carrier wave -u_{c}+UCₘ/2 after phase shifting, and pass through a proper combinational logic circuit to obtain the time-sharing control signals u_{gs11}, u_{gs21}, ..., u_{gsn1}, u_{gs12}, u_{gs22}, ..., u_{gsn2}, u_{gs'11}, u_{gs'21}, ..., u_{gs'n1}, u_{gs'12}, u_{gs'22}, ..., u_{gs'n2} of the power switch of the *n*-input single-output high-frequency inverting circuit. The bipolar sawtooth carrier wave u_{c} passes through the rising edge divided-by-two frequency to obtain the control signal u_{gs4} of the *n*-input single-output high-frequency inverter power switch and the inversion signal u_{gs3} thereof. The current error amplified signal voltage feedback signal inverter u_{of} and the sinusoidal voltage reference uᵣ are compared and amplified by the proportional-integral controller. The signal iₑ obtained by the product of the voltage error amplified signal Iₙₑ and the sinusoidal synchronizing signal are respectively compared with the sawsooth carrier wave u_{c} and -u_{c}. The control signals U_{gs5}(u_{gs'5}), U_{gs6}(U_{gs'6}), U_{gs7}(U_{gs'7}), u_{gs8}(u_{gs'8}) of the power switches of the cycloconverter are obtained by the output inductance current gating signal and a proper combinational logic circuit. The energy management control strategy of unipolar phase shift maximum power output can be described in brief as follows. The 1^{st}, 2^{nd}, ... n^{th} paths of input current feedback signals I_{i1f}, I_{i2f}, ..., I_{i(n-1)f} of the inverter and the 1^{st}, 2^{nd}, ... n-1^{th} of the input sources are obtained by performing the maximum power point calculating on the 1^{st}, 2^{nd}, ... n^{th} paths of input source and the 1^{st}, 2^{nd}, ... n^{th} paths of the input current feedback signals of the inverter I_{i1f}, I_{i2f}, ... ,I_{inf} are respectively compared and amplified by the proportional-integral controller. The current error amplified signals I₁ₑ, I₂ₑ, ..., I₍ₙ₋₁₎ₑ respectively passes through the time-sharing pulse generating circuit and the proper combinational logic circuits to obtain time-sharing signals u_{gs11}, u_{gs21}, ..., u_{gsn1}, u_{gs12}, u_{gs22}, ..., u_{gsn2}, u_{gs'11}, u_{gs'21}, ..., u_{gs'n1}, u_{gs'12}, u_{gs'22}, ..., u_{gs'n2} of the power switch of the n-input single-output high-frequency inverting circuit. The signal iₑ obtained by the product of the current error amplified signal Iₙₑ and the sinusoidal synchronizing signal and the inversion signal -iₑ thereof are respectively compared with the bipolar sawtooth carrier wave u_{c}, and pass through the falling edge divided-by-two frequency and the proper combinational logic circuit to obtain the control signal u_{gs3} and u_{gs4} of the *n*-input single-output high-frequency inverter power switch. In the figures, u_{com} represents a common turn-on signal of the upper bridge arm of the *n*-input single-output high-frequency inverting circuit. When the common turn-on signal u_{com} of the upper arm is at a high level, the power switches S₁₁ and S₁₂ in the 1^{st} path of are turned on simultaneously (alternatively, it can also be designed that the other power switches in the other paths are turned on simultaneously), and the 2^{nd}, ..., n^{th} path of the power switches S₂₁, ..., Sₙ₁, S₂₂, ..., Sₙ₂ are turned off, ensuring there is a freewheeling circuit. The bipolar sawtooth carrier wave u_{c} passes through the falling edge divided-by-two frequency to obtain the control signals u_{gs5}(u_{gs'5}), u_{gs6}(u_{gs'6}), u_{gs7}(u_{gs'7}), u_{gs8}(u_{gs'8}) of the power switch of the cycloconverter. In the time-sharing pulse generating circuits 1 and 2, I_{eΣ}, I_{eΣm}, I * _{eΣ} are respctively the sum of the current error amplified signals I₁ₑ, I₂ₑ, ..., I₍ₙ₋₁₎ₑ, the maximum value of the sum of the current error amplified signals I₁ₑ, I₂ₑ, ..., I₍ₙ₋₁₎ₑ, and a ratio of I_{eΣ} and I_{eΣm}, and V₁ and k(0 ~ 1) are respectively an integral value and a proportionality coefficient of u_{gs1}. The 1^{st}, 2^{nd}, ... n^{th} paths of the current regulators respectively and independently work and are all used to realize the maximum power output of each input source. The n paths of the input sources collaboratively supply the electric power to the load.

As shown in FIG. 17, the schematic oscillogram of bipolar phase shift control indicates the high-frequency switching period Ts, the turn-on time Tₒₙ₁, Tₒₙ₂,...,Tₒₙₙ of the 1^{st}, 2^{nd}, ... n^{th} paths of the input sources in a certain high-frequency switching period Ts, and the total turn-on time Tₒₙ=Tₒₙ₁+Tₒₙ₂+...+Tₒₙₙ. As shown in FIGS. 17 and 19, the common turn-on time T_{com} and the phase-shifting angle θ of the bipolar phase shift control and the unipolar phase shift control varies sinusoidally in an output voltage period. Additionally, as for the half-bridge bridge circuits shown in FIGS. 12 and 13, a half of each input AC voltage value (Uᵢ₁/2, Uᵢ₂/2, ..., Uᵢₙ/2) should be substituted into an equation of a voltage transfer ratio for calculation.

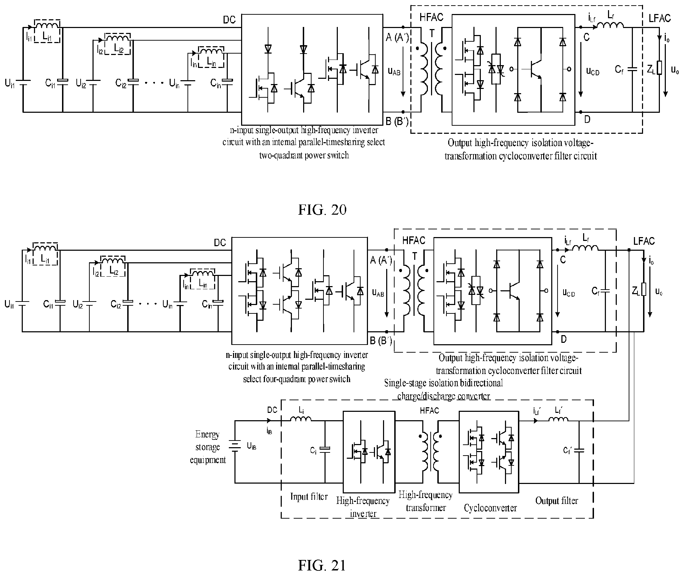

It should be additionally noted that, in the case where there is only a forward power flow and no backward power flow, such as a grid-tied case whose power factor is 1.0 on a grid side, it is necessary to simplify the bidirectional power flow voltage type single-stage multi-input high-frequency link's inverting circuit with the internal parallel-timesharing select switch shown in FIG. 5 into the unidirectional power flow circuit structure shown in FIG. 20. As for the unidirectional power flow circuit structure shown in FIG. 20, namely the technical solution of claim 3 will be further described herein. The single-stage multi-input buck type high-frequency link's inverter with the internal parallel-timesharing select switch according to claim 1, wherein the multi-input single-output high-frequency inverting circuit is substituted by a unidirectional power flow single-input single-output high-frequency inverting circuit composed of a plurality of internally two-quadrant power switches capable of withstanding the bidirectional voltage stress and the unidirectional current stress with the internally parallel-timesharing select switch, which is equivalent to one unidirectional power flow single-input single-output high-frequency inverting circuit at any time. The multi-input single-output high-frequency inverting circuit is composed of a plurality of two-quadrant power switches capable of withstanding the bidirectional voltage stress and the unidirectional current stress, and one or more two-quadrant power switches capable of withstanding the unidirectional voltage stress and the bidirectional current stress, or is merely composed of a plurality of two-quadrant power switches capable of withstanding the unidirectional voltage stress and the bidirectional current stress, wherein the two-quadrant power switch capable of withstanding the bidirectional voltage stress and the unidirectional current stress is composed of the two-quadrant power switch and a diode connected in series. The four-quadrant power switches in the multi-input single-output high-frequency inverting circuit of the circuit topology embodiments of the bidirectional power flow single-stage multi-input buck type high-frequency link's inverter with the internal parallel-timesharing select switch shown in FIGS. 8, 9, 10, 11, 12, 13, 14, and 15 are only needed to be substituted by the two-quadrant power switches capable of withstanding the bidirectional voltage stress and the unidirectional current stress, thereby forming the corresponding topology family embodiments of a unidirectional power flow circuit.

In order to form the independent power supply system capable of making full use of energy from the plurality of input sources, the plurality of input sources should work in the maximum power input mode and needs to be configured with the energy storage equipment to realize the stability of the output voltage, namely the output end of the inverter is connected in parallel to one single-stage isolation bidirectional charge/discharge converter, as shown in FIG. 21. The single-stage isolation bidirectional charge/discharge converter is composed of the input inverter (Lᵢ and Cᵢ, or Cᵢ), the high-frequency inverter, the high-frequency transformer, the cycloconverter, and the output filter (L_{f}' and C_{f}'), which are successively connected in cascade. When the single-stage isolation bidirectional charge/discharge converter is performing a forward energy transfer (discharging of the energy storage equipment) and a backward energy transfer (charging of the energy storage equipment), the single-stage isolation bidirectional charge/discharge converter is respectively equivalent to a single-stage high-frequency link DC-AC converter or a single-stage high-frequency link AC-DC converter.

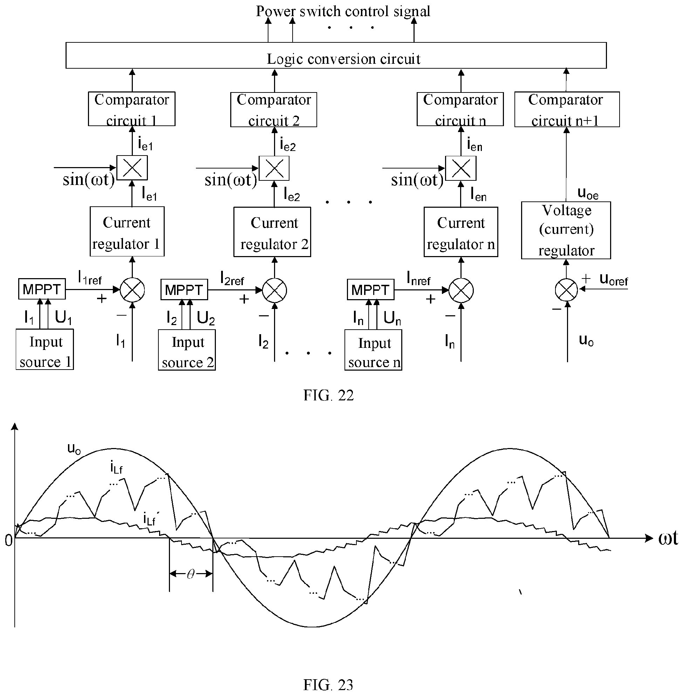

The independent power supply system employs the energy management control strategy of the maximum power output of an output voltage independent control loop circuit with the single-stage multi-input high-frequency link's inverter. When a load power expressed as Pₒ=UₒIₒ is larger than a sum of maximum powers P₁ₘₐₓ+P₂ₘₐₓ+...+Pₙₘₐₓ of a plurality of the input sources, the energy storage equipment such as the accumulator and the super-capacitor supply the shortage of the power by the load through the single-stage isolation bidirectional charge/discharge converter, i.e. in power supply mode II, or the energy equipment individually supplies the electric power to the load, i.e. power supply mode III, which is an extreme case of the power supply mode II. When a load power Pₒ=UₒIₒ is lower than the sum of the maximum powers P₁ₘₐₓ+P₂ₘₐₓ+...+Pₙₘₐₓ of the plurality of the input sources, the rest of the energy output by the plurality of input sources are supplied to charge the energy storage equipment through the single-stage isolation bidirectional charge/discharge converter (i.e. the power supply mode I.). Taking a resistive load as an example, a power flow direction control of the single-stage isolation bidirectional charge/discharge converter is illustrated hereinafter and is shown in FIG. 23. As for the output filter capacitor C_{f}, C_{f}' and the load Z_{L}, a parallel connection of the output end of the single-stage multi-input buck type high-frequency link's inverter with the internal parallel-timesharing select switch and the output end of single-stage isolation bidirectional charge/discharge converter is equivalent to a parallel superposition of two electric current sources. As the energy management control strategy is shown in FIG. 22, it can be known that an output filter inductor electric current i_{Lf} of the single-stage multi-input buck type high-frequency link's inverter with the internal parallel-timesharing select switch and the output voltage uₒ have the same frequency and the same phase, and output the active power. The charge/discharge converter is controlled through an SPWM signal obtained by crossing the error amplified signal uoe of the output voltage uₒ and the voltage reference u_{oref} with the high-frequency carrier wave. There is a phase difference *θ* between the output filter inductor electric current i_{Lf}' of the charge/discharge converter and uₒ. Different phase differences *θ* are indicative of inputting of the active power of different magnitudes and directions. When Pₒ=P₁ₘₐₓ+P₂ₘₐₓ+...+Pₙₘₐₓ, *θ*=90° and the active power output by the charge/discharge converter are zero, the charge/discharge converter is in a no-load state. When Pₒ>P₁ₘₐₓ+P₂ₘₐₓ+...+Pₙₘₐₓ, uₒ decreases and *θ*<90°. The charge/discharge converter outputs the active power and the energy storage equipment supplies electric power to the load. Therefore, the energy storage equipment supplies the shortage of the power needed by the load. When Pₒ<P₁ₘₐₓ+P₂ₘₐₓ+...+Pₙₘₐₓ, uₒ increases and *θ*>90°. The charge/discharge converter outputs a minus active power and the load feeds back energy to the energy storage, namely, the rest of the power of the plurality of input sources is supplied to charge the energy storage equipment. When *θ*=180°, the energy is fed back to the energy storage equipment by the load and is maximum. Therefore, the energy management control strategy can control the magnitude and direction of the power flow of the single-stage isolation bidirectional charge/discharge converter in real time according to the relative magnitude of Pₒ and P₁ₘₐₓ+P₂ₘₐₓ+...+Pₙₘₐₓ, which realizes that the system can smoothly and seamlessly switch between three power supply modes.

## Claims

1. Single-stage N-input, single output buck type high-frequency link inverter system with internal parallel timesharing select switches (S₁₁ - S₁ₙ, S₁₂ - S₂ₙ),
configured to convert a plurality of ground-connected input sources (Uᵢ₁-Uᵢₙ) with unstable input DC voltages into a stable high-quality output AC (U₀) through a single-stage high-frequency isolation, said plurality of input sources configured to supply electric power to the output in a time-sharing manner in the high-frequency switching period,
wherein N is a natural number larger than 1 and represents a path number of a plurality of inputs, and
wherein each internal parallel timesharing select switch (S₁₁ - S₁ₙ, S₁₂ - S₂ₙ) is a high-frequency four-quadrant power switch capable of withstanding bidirectional voltage stress and bidirectionally conducting and blocking current, and
wherein the inverter system comprises
- N LC (Lᵢ₁-Lᵢₙ, Cᵢ₁-Cᵢₙ) or L (Lᵢ₁-Lᵢₙ) input filters each connected between an input of the inverter system and the inverter,
- 2 x N high-frequency internal parallel timesharing select switches (S₁₁ - S₁ₙ, S₁₂ - S₂ₙ) forming part of a multi-input, single-output high-frequency inverting circuit,
- a high-frequency transformer arrangement (T),
- a cycloconverter comprising two or four four-quandrant high-frequency power switches (S₅/S₆, S₇/S₈, S'₅/S'₆, S'₇/S'₈) capable of withstanding a bidirectional voltage stress and bidirectionally conducting and blocking current,
- an output LC filter (L_{f}, C_{f})
successively connected in cascade, and
each input of said N input filters (Lᵢ₁-Lᵢₙ, Cᵢ₁-Cᵢₙ; Lᵢ₁-Lᵢₙ) configured to be connected to one of said input sources (Uᵢ₁-Uᵢₙ), and each output of said N input filters connected to a pair of said internal parallel timesharing select switches (S₁₁ - S₁ₙ, S₁₂ - S₂ₙ), the latter configured to allow selection of one of the inputs at a time during the high-frequency switching period,
the circuit topology of said multi-input, single-output high frequency inversion circuit comprising said 2xN high-frequency internal parallel timesharing select switches (S₁₁ - S₁ₙ, S₁₂ - S₂ₙ) in one of
- a push-pull full-wave circuit comprising a transformer (T) with split windings on primary and secondary sides (N₁, N₁; N₂, N₂) **or**
a push-pull bridge circuit comprising a transformer (T) with a split winding on the primary side (N₁, N₁) and a single winding on the secondary side (N₂),
each end of the primary split winding being connected to each output of each input filter by one of the 2xN high-frequency internal parallel timesharing select switches, the mid-point of the split primary side winding being connected to the common ground of the inputs,
- a push-pull forward full-wave circuit comprising an additional two-quadrant high-frequency power switch (S₃), a transformer with two separate primary windings (N₁, N₁) and a split secondary winding (N₂, N₂) and an additional capacitor (C_{S}), **or**
a push-pull forward bridge circuit comprising an additional two-quadrant high-frequency power switch (S₃), a transformer (T) with two separate primary windings (N₁, N₁) and a single secondary winding (N₂) and an additional capacitor (C_{S}),
one end of each of the first and second primary windings being connected to each output of each input filter by one of the 2xN high-frequency internal parallel timesharing select switches, the second end of the first primary winding being connected to the common ground of the inputs by the additional two-quadrant high-frequency power switch (S₃), the second end of the second primary winding being connected to the common ground of the inputs and the first end of the second primary winding being connected to the second end of the first primary winding by means of said additional capacitor (C_{S}),
- a half-bridge full-wave circuit with an additional two-quadrant high-frequency power switch (S₄), a transformer (T) with a single primary winding (N₁) and a split secondary winding (N₂, N₂) and a series connection of two additional capacitors (C₁, C₂), **or**
a half-bridge circuit with an additional two-quadrant high-frequency power switch (S₄), a transformer (T) with a single primary winding (N₁) and a single secondary winding (N₂) and a series connection of two additional capacitors (C₁, C₂),
one end of the primary winding being connected to each output of each input filter by one of the 2xN high-frequency internal parallel timesharing select switches and to the common ground of the inputs by the additional two-quadrant switch, the other end of the primary winding being connected to the mid-point between the two additional capacitors, the other end of the first capacitor being connected to each output of each input filter by one of the 2xN high-frequency internal parallel timesharing select switches, the other end of the second capacitor being connected to the common ground of the inputs,
- a full-bridge full-wave circuit with two additional two-quadrant high-frequency power switches (S₃, S₄) and a transformer (T) with a single primary winding (N₁) and a split secondary winding (N₂, N₂), **or**
a full-bridge circuit with two additional two-quadrant high-frequency power switches (S3, S4) and a transformer with a single windings on the primary and secondary sides (N₁, N₂),
each end of the primary winding being connected to each output of each input filter by one of the 2xN high-frequency internal parallel timesharing select switches, the two additional two-quadrant switches connecting each end of the primary winding to the common ground of the inputs,
where a split secondary winding (N₂, N₂) is combined with a cycloconverter with two high-frequency four-quadrant switches (S₅/S₆, S₇/S₈) each connecting one end of the split secondary winding to the output LC filter (L_{f}, C_{f}), the mid-point of the split winding connected to the neutral of the AC output,
while a single secondary winding (N₂) is combined with a cycloconverter with four high-frequency four-quadrant switches (S₅/S₆, S₇/S₈, S'₅/S'₆, S'₇/S'₈) two of them connecting the ends of the secondary winding to the output filter, the other two connecting the ends of the secondary winding to the neutral of the AC output,
said inverter system being configured to modulate the multi-path input DC voltage sources either into a bipolar two-state multi-level high-frequency voltage square wave or a bipolar three-state multi-level voltage wave, the third state being zero (U_{AB}),
wherein an amplitude of the bipolar two-state multi-level high-frequency voltage square wave or the bipolar three-state multi-level voltage wave is configured to depend on the input DC voltages and
said voltage waves are configured to be isolated and transformed by the high-frequency transformer and
the transformed voltage wave configured to be demodulated by the cycloconverter to form a bipolar two-state or unipolar three-state multi-level SPWM voltage wave (U_{CD});
said SPWM voltage wave configured to pass through the output LC filter to provide a sinusoidal AC voltage.

2. The inverter according to claim 1, wherein an output end of the inverter is connected in parallel to a single-stage isolated bidirectional charge/discharge converter of energy storage equipment to form an independent power supply system with a stable output voltage.

## Patentansprüche

1. Einstufiges Hochfrequenz-Zwischenkreis-Wechselrichtersystem mit N Eingängen und einem Ausgang mit internen parallelen Timesharing-Wahlschaltern (S₁₁ - S₁ₙ, S₁₂ - S₂ₙ), das so konfiguriert ist, dass es eine Vielzahl von erdgekoppelten Eingangsquellen (Uᵢₗ- Uᵢₙ) mit instabilen Eingangsgleichspannungen durch eine einstufige Hochfrequenz-Isolation in einen stabilen, hochwertigen Ausgangswechselstrom (U₀) umwandelt, wobei die Vielzahl von Eingangsquellen so konfiguriert ist, dass sie dem Ausgang in der Hochfrequenz-Schaltperiode elektrische Leistung in einer Timesharing-Weise zuführen, wobei N eine natürliche Zahl größer als 1 ist und eine Pfadnummer einer Vielzahl von Eingängen darstellt, und wobei jeder interne parallele Timesharing-Wahlschalter (S₁₁ - S₁ₙ, S₁₂ - S₂ₙ) ein Hochfrequenz-Vier-Quadranten-Leistungsschalter ist, der in der Lage ist, einer bidirektionalen Spannungsbelastung standzuhalten und Strom bidirektional zu leiten und zu sperren, und
wobei das Wechselrichtersystem Folgendes umfasst
- N LC (Lᵢₗ - Lᵢₙ, Cᵢₗ - Cᵢₙ) oder L (Lᵢₗ - Lᵢₙ) Eingangsfilter, die jeweils zwischen einem Eingang des Wechselrichtersystems und dem Wechselrichter angeschlossen sind,
- 2 x N interne parallele Hochfrequenz-Wahlschalter (S₁₁ - S₁ₙ, S₁₂ - S₂ₙ), die Teil einer invertierenden Hochfrequenz-Schaltung mit mehreren Eingängen und einem Ausgang sind,
- eine Hochfrequenz-Transformatoranordnung (T),
- einen Zyklokonverter, der zwei oder vier Vier-Quadranten-Hochfrequenz-Leistungsschalter (S₅/S₆, S₇/S₈, S'₅/S'₆, S'₇/S'₈) umfasst, die in der Lage sind, einer bidirektionalen Spannungsbelastung standzuhalten und Strom bidirektional zu leiten und zu sperren,
- ein LC-Ausgangsfilter (L_{f}, C_{f})
nacheinander in Kaskade geschaltet sind, und
jeder Eingang der N Eingangsfilter (Lᵢₗ -Lᵢₙ, Cᵢₗ - Cᵢₙ; Lᵢₗ - Lᵢₙ) so konfiguriert ist, dass er mit einer der Eingangsquellen (Uᵢₗ - Uᵢₙ) verbunden ist, und jeder Ausgang der N Eingangsfilter mit einem Paar der internen parallelen Timesharing-Wahlschalter (S₁₁ - S₁ₙ, S₁₂ - S₂ₙ) verbunden ist, wobei letztere so konfiguriert sind, dass sie die Auswahl eines der Eingänge zu einem Zeitpunkt während der Hochfrequenz-Schaltperiode ermöglichen,
wobei die Schaltungstopologie der Hochfrequenz-Inversionsschaltung mit mehreren Eingängen und einem Ausgang die 2xN internen parallelen Hochfrequenz-Wahlschalter (S₁₁ - S₁ₙ, S₁₂ - S₂ₙ) in einer der folgenden Positionen umfasst
- eine Gegentakt-Vollwellenschaltung mit einem Transformator (T) mit geteilten Wicklungen auf Primär- und Sekundärseite (N₁, N₁; N₂, N₂) oder
eine Gegentakt-Brückenschaltung mit einem Transformator (T) mit einer geteilten Wicklung auf der Primärseite (N₁, N₁) und einer einzigen Wicklung auf der Sekundärseite (N₂),
jedes Ende der geteilten Primärwicklung ist mit jedem Ausgang jedes Eingangsfilters über einen der internen parallelen 2xN-Hochfrequenz-Timesharing-Wahlschalter verbunden, wobei der Mittelpunkt der geteilten Wicklung auf der Primärseite mit der gemeinsamen Masse der Eingänge verbunden ist,
- eine Gegentakt-Vorwärtsvollwellenschaltung mit einem zusätzlichen Zwei-Quadranten-Hochfrequenz-Leistungsschalter (S₃), einem Transformator mit zwei getrennten Primärwicklungen (N₁, N₁) und einer geteilten Sekundärwicklung (N₂, N₂) sowie einem zusätzlichen Kondensator (Cs), oder
eine Gegentakt-Vorwärtsbrückenschaltung mit einem zusätzlichen Zwei-Quadranten-Hochfrequenz-Leistungsschalter (S₃), einem Transformator (T) mit zwei getrennten Primärwicklungen (N₁, N₁) und einer einzigen Sekundärwicklung (N₂) sowie einem zusätzlichen Kondensator (Cs),
wobei ein Ende jeder der ersten und zweiten Primärwicklungen mit jedem Ausgang jedes Eingangsfilters durch einen der internen parallelen 2xN-Hochfrequenz-Timesharing-Wahlschalter verbunden ist, das zweite Ende der ersten Primärwicklung mit der gemeinsamen Masse der Eingänge durch den zusätzlichen Zwei-Quadranten-Hochfrequenz-Leistungsschalter (S₃) verbunden ist, das zweite Ende der zweiten Primärwicklung mit der gemeinsamen Masse der Eingänge verbunden ist und das erste Ende der zweiten Primärwicklung mit dem zweiten Ende der ersten Primärwicklung mittels des zusätzlichen Kondensators (C_{S}) verbunden ist,
- eine Halbbrücken-Vollwellenschaltung mit einem zusätzlichen Zwei-Quadranten-Hochfrequenz-Leistungsschalter (S₄), einem Transformator (T) mit einer einzigen Primärwicklung (N₁) und einer geteilten Sekundärwicklung (N₂, N₂) und einer Reihenschaltung von zwei zusätzlichen Kondensatoren (C₁ C₂) oder
eine Halbbrückenschaltung mit einem zusätzlichen Zwei-Quadranten-Hochfrequenz-Leistungsschalter (S₄), einem Transformator (T) mit einer einzigen Primärwicklung (N₁) und einer einzigen Sekundärwicklung (N₂) und einer Reihenschaltung von zwei zusätzlichen Kondensatoren (C₁ C₂),
wobei ein Ende der Primärwicklung mit jedem Ausgang jedes Eingangsfilters durch einen der 2xN internen parallelen Hochfrequenz-Timesharing-Wahlschalter und mit der gemeinsamen Masse der Eingänge durch den zusätzlichen Zwei-Quadranten-Schalter verbunden ist, das andere Ende der Primärwicklung mit dem Mittelpunkt zwischen den beiden zusätzlichen Kondensatoren verbunden ist, das andere Ende des ersten Kondensators mit jedem Ausgang jedes Eingangsfilters durch einen der 2xN internen parallelen Hochfrequenz-Timesharing-Wahlschalter verbunden ist, das andere Ende des zweiten Kondensators mit der gemeinsamen Masse der Eingänge verbunden ist,
- eine Vollbrücken-Vollwellenschaltung mit zwei zusätzlichen Zwei-Quadranten-Hochfrequenz-Leistungsschaltern (S₃, S₄) und einem Transformator (T) mit einer einzigen Primärwicklung (N₁) und einer geteilten Sekundärwicklung (N₂, N₂), oder
eine Vollbrückenschaltung mit zwei zusätzlichen Zwei-Quadranten-Hochfrequenz-Leistungsschaltern (S₃, S₄) und einem Transformator mit einer einzigen Wicklung auf der Primär- und Sekundärseite (N₁, N₂),
jedes Ende der Primärwicklung ist mit jedem Ausgang jedes Eingangsfilters über einen der 2xN internen parallelen Hochfrequenz-Timesharing-Wahlschalter verbunden, wobei die beiden zusätzlichen Zwei-Quadranten-Schalter jedes Ende der Primärwicklung mit der gemeinsamen Masse der Eingänge verbinden,
bei dem eine geteilte Sekundärwicklung (N₂, N₂) mit einem Zyklokonverter mit zwei Hochfrequenz-Vier-Quadranten-Schaltern (S₅/S₆, S₇/S₈) kombiniert ist, die jeweils ein Ende der geteilten Sekundärwicklung mit dem LC-Ausgangsfilter (L_{f}, C_{f}) verbinden, wobei der Mittelpunkt der geteilten Wicklung mit dem Nullleiter des Wechselstromausgangs verbunden ist,
während eine einzelne Sekundärwicklung (N₂) mit einem Zyklonumrichter mit vier Hochfrequenz-Vier-Quadranten-Schaltern (S₅/S₆, S₇/S₈, S'₅/S'₆, S'₇/S'₈) kombiniert ist, von denen zwei die Enden der Sekundärwicklung mit dem Ausgangsfilter und die beiden anderen die Enden der Sekundärwicklung mit dem Nullleiter des Wechselstromausgangs verbinden,
wobei das Wechselrichtersystem so konfiguriert ist, dass es die Mehrweg-Eingangs-Gleichspannungsquellen entweder in eine bipolare Zwei-Zustands-Mehrstufen-Hochfrequenz-Spannungs-Rechteckwelle oder eine bipolare Drei-Zustands-Mehrstufen-Spannungswelle moduliert, wobei der dritte Zustand Null (U_{AB}) ist,
wobei eine Amplitude der bipolaren Zwei-Zustands-Mehrstufen-Hochfrequenz-Spannungs-Rechteckwelle oder der bipolaren Drei-Zustands-Mehrstufen-Spannungswelle so konfiguriert ist, dass sie von den Eingangsgleichspannungen abhängt, und die Spannungswellen so konfiguriert sind, dass sie durch den Hochfrequenz-Transformator isoliert und transformiert werden, und
die transformierte Spannungswelle, die so konfiguriert ist, dass sie durch den Zyklokonverter demoduliert wird, um eine bipolare Zwei-Zustands- oder unipolare Drei-Zustands-Mehrstufen-SPWM-Spannungswelle (U_{CD}) zu bilden;
wobei die SPWM-Spannungswelle so konfiguriert ist, dass sie das LC-Ausgangsfilter durchläuft, um eine sinusförmige Wechselspannung zu erzeugen.

2. Wechselrichter nach Anspruch 1, wobei eine Ausgangsseite des Wechselrichters parallel zu einem einstufigen isolierten bidirektionalen Lade-/Entladewandler einer Energiespeichereinrichtung geschaltet ist, um ein unabhängiges Stromversorgungssystem mit einer stabilen Ausgangsspannung zu bilden.

## Revendications

1. Système d'onduleur de liaison à haute fréquence de type sousvolteur à N-entrée à mono-étage et à mono-sortie, comprenant des commutateurs de sélection de partage temporel parallèles internes (Su - S₁ₙ, S₁₂ - S₂ₙ), configuré pour convertir une pluralité de sources d'entrée mises à la terre (Uᵢₗ - Uᵢₙ) sous tensions d'entrée CC instables en une sortie CA stable de haute qualité (U₀) par l'intermédiaire d'une isolation à haute fréquence à mono-étage, ladite pluralité de sources d'entrée étant configurée pour alimenter la sortie en puissance électrique de manière de partage temporel pendant une durée de commutation à haute fréquence, dans lequel N est un nombre naturel supérieur à 1 et signifie un numéro de chemin d'une pluralité d'entrées,
dans lequel chaque commutateur de sélection de partage temporel parallèle interne (S₁₁ - S₁ₙ, S₁₂ - S₂ₙ) est un commutateur de puissance à haute fréquence en quatre quadrants capable de résister à une contrainte de tension bidirectionnelle et à un courant de conduction et de blocage bidirectionnel, et
dans lequel le système d'onduleur comprend
- N LC (Lᵢₗ - Lᵢₙ, Cᵢₗ - Cᵢₙ) ou L (Lᵢₗ - Lᵢₙ) filtres d'entrée connectés chacun entre une entrée du système d'onduleur et l'onduleur,
- 2 x N commutateurs de sélection de partage temporel parallèles internes à haute fréquence (S₁₁ - S₁ₙ, S₁₂ - S₂ₙ) faisant partie d'un circuit d'inversion à haute fréquence à multi-entrées et mono-sortie,
- un dispositif de transformation à haute fréquence (T),
- un cyclo-convertisseur comprenant deux ou quatre commutateurs de puissance à haute fréquence en quatre quadrants (S₅/S₆, S₇/S₈, S'₅/S'₆, S'₇/S'₈) capables de résister à une contrainte de tension bidirectionnelle et à un courant de conduction et de blocage bidirectionnel,
- un filtre LC de sortie (L_{f}, C_{f})
connectés de manière successive en cascade, et
chaque entrée desdits N filtres d'entrée (Lᵢₗ -Lᵢₙ, Cᵢₗ - Cᵢₙ; Lᵢₗ - Lᵢₙ) étant configurée pour être connectée à l'une desdites sources d'entrée (Uᵢₗ - Uᵢₙ), et chaque sortie desdits N filtres d'entrée étant configurée pour être connectée à une paire desdites commutateurs de sélection de partage temporel parallèles internes (S₁₁ - S₁ₙ, S₁₂ - S₂ₙ), et les dernières étant configurées pour permettre une sélection d'une des entrées à la fois pendant la durée de commutation à haute fréquence,
la topologie de circuit dudit circuit d'inversion à haute fréquence à multi-entrées et mono-sortie comprenant lesdits 2xN commutateurs de sélection de partage temporel parallèles internes à haute fréquence (S₁₁ - S₁ₙ, S₁₂ - S₂ₙ) dans un parmi
- un circuit double alternance push-pull comprenant un transformateur (T) ayant des enroulements séparés sur des côtés primaire et secondaires (N₁, N₁; N₂, N₂), **ou**
un circuit en pond push-pull comprenant un transformateur (T) ayant un enroulement séparé sur le côté primaire (N₁, N₁) et un enroulement individuel sur le côtés secondaire (N₂),
chaque extrémité de l'enroulement séparé primaire étant connectée à chaque sortie de chaque filtre d'entrée par l'un des 2xN commutateurs de sélection de partage temporel parallèles internes à haute fréquence, et le point médian de l'enroulement séparé primaire étant connecté à la masse commune des entrées,
- un circuit double alternance direct push-pull comprenant un commutateur de puissance à haute fréquence en deux quadrants supplémentaire (S₃), un transformateur ayant deux enroulements primaires séparés (N₁, N₁) et un enroulement secondaire séparé (N₂, N₂) et un condensateur supplémentaire (Cs), **ou**
un circuit en pont direct push-pull comprenant un commutateur de puissance à haute fréquence en deux quadrants supplémentaire (S₃), un transformateur (T) ayant deux enroulements primaires séparés (N₁, N₁) et un enroulement secondaire individuel (N₂) et un condensateur supplémentaire (Cs),
une extrémité de chacun des premier et second enroulements primaires étant connectée à chaque sortie de chaque filtre d'entrée par l'un des 2xN commutateurs de sélection de partage temporel parallèles internes à haute fréquence, et la seconde extrémité du premier enroulement primaire étant connectée à la masse commune des entrées par le commutateur de puissance à haute fréquence en deux quadrants supplémentaire (S₃), la seconde extrémité du second enroulement primaire étant connectée à la masse commune des entrées et la première extrémité du second enroulement primaire étant connectée à la seconde extrémité du premier enroulement primaire par ledit condensateur supplémentaire (Cs),
- un circuit double alternance en semi-pont comprenant un commutateur de puissance à haute fréquence en deux quadrants supplémentaire (S₄), un transformateur (T) ayant un enroulement primaire individuel (N₁) et un enroulement secondaire séparé (N₂, N₂) et deux condensateurs supplémentaires en série (C₁ C₂), **ou**
un circuit en semi-pont comprenant un commutateur de puissance à haute fréquence en deux quadrants supplémentaire (S₄), un transformateur (T) ayant un enroulement primaire individuel (N₁) et un enroulement secondaire individuel (N₂) et deux condensateurs supplémentaires en série (C₁ C₂),
une extrémité de l'enroulement primaire étant connectée à chaque sortie de chaque filtre d'entrée par l'un des 2xN commutateurs de sélection de partage temporel parallèles internes à haute fréquence et à la masse commune des entrées par le commutateur en deux quadrants supplémentaire, l'autre extrémité de l'enroulement primaire étant connecté au point médian entre les deux condensateurs supplémentaires, l'autre extrémité du premier condensateur étant connectée à chaque sortie de chaque filtre d'entrée par l'un des 2xN commutateurs de sélection de partage temporel parallèles internes à haute fréquence, et l'autre extrémité du second condensateur étant connecté à la masse commune des entrées,
- un circuit double alternance en pont complet comprenant deux commutateurs de puissance à haute fréquence en deux quadrants supplémentaires (S₃, S₄) et un transformateur (T) ayant un enroulement primaire individuel (N₁) un enroulement secondaire séparé (N₂, N₂), ou
un circuit en pont complet comprenant deux commutateurs de puissance à haute fréquence en deux quadrants supplémentaires (S₃, S₄) et un transformateur ayant un enroulement individuel sur les côtés primaire et secondaires (N₁, N₂),
chaque extrémité de l'enroulement primaire étant connectée à chaque sortie de chaque filtre d'entrée par l'un des 2xN commutateurs de sélection de partage temporel parallèles internes à haute fréquence, et les deux commutateurs en deux quadrants supplémentaires étant connectés à chaque extrémité de l'enroulement primaire à la masse commune des entrées,
dans lequel, un enroulement secondaire séparé (N₂, N₂) est combiné avec un cyclo-convertisseur ayant deux commutateurs de puissance à haute fréquence en quatre quadrants (S₅/S₆, S₇/S₈) connectant chacun une extrémité de l'enroulement secondaire séparé au filtre LC de sortie (L_{f}, C_{f}), et le point médian de l'enroulement séparé est connecté au neutre de la sortie CA,
dans lequel, un enroulement secondaire individuel (N₂) est combiné avec un cyclo-convertisseur ayant quatre commutateurs à haute fréquence en quatre quadrants (S₅/S₆, S₇/S₈, S'₅/S'₆, S'₇/S'₈), deux parmi eux connectant une extrémité de l'enroulement secondaire au filtre de sortie, et les autres deux connectant les extrémités de l'enroulement secondaire au neutre de la sortie CA,
dans lequel, ledit système d'onduleur est configuré pour moduler les sources de tension d'entrée CC à multi-chemin en une onde carrée de tension à haute fréquence à multi-niveau bipolaire à deux états, ou en une onde de tension à multi-niveau bipolaire à trois états, le troisième état étant zéro (U_{AB}),
dans lequel, une amplitude de l'onde carrée de tension à haute fréquence à multi-niveau bipolaire à deux états ou l'onde de tension à multi-niveau bipolaire à trois états est configurée pour être isolés et transformés par le transformateur à haute fréquence et
l'onde de tension transformée est configurée pour être démodulée par le cyclo-convertisseur de sorte de former une onde de tension SPWM bipolaire à deux états ou multi-niveaux unipolaire à trois états (U_{CD}) ;
et ladite onde de tension SPWM est configurée pour passe à traverser le filtre LC de sortie pour fournir une tension CA sinusoïdale.

2. Onduleur selon la revendication 1, dans lequel une extrémité de sortie de l'onduleur est connectée en parallèle à un convertisseur de recharge/décharge bidirectionnel isolé à mono-étage d'un équipement de stockage d'énergie pour former un système d'alimentation de puissance indépendant sous une tension de sortie stable.
